(19) Europäisches Patentamt
European Patent Office
Office européen des brevets

(11) EP 3 894 849 B1

# (12) EUROPÄISCHE PATENTSCHRIFT

(45) Veröffentlichungstag und Bekanntmachung des Hinweises auf die Patenterteilung:
**23.11.2022 Patentblatt 2022/47**

(21) Anmeldenummer: **19829428.2**

(22) Anmeldetag: **10.12.2019**

(51) Internationale Patentklassifikation (IPC):
***G01N 27/36*** *(2006.01)*

(52) Gemeinsame Patentklassifikation (CPC):
**G01N 27/36**

(86) Internationale Anmeldenummer:
**PCT/EP2019/084420**

(87) Internationale Veröffentlichungsnummer:
**WO 2020/120472 (18.06.2020 Gazette 2020/25)**

## (54) EINSTABMESSKETTE MIT ERWEITERTEM REFERENZRAUM UND VERFAHREN ZUM HERSTELLEN DER EINSTABMESSKETTE

COMBINATION ELECTRODE HAVING EXTENDED REFERENCE CHAMBER AND METHOD FOR PRODUCING THE COMBINATION ELECTRODE

ÉLECTRODE COMBINÉE À ESPACE DE RÉFÉRENCE ÉLARGI ET PROCÉDÉ DE FABRICATION D'UNE ÉLECTRODE COMBINÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2018 DE 102018132131**

(43) Veröffentlichungstag der Anmeldung:
**20.10.2021 Patentblatt 2021/42**

(73) Patentinhaber: **Hamilton Bonaduz AG**
**7402 Bonaduz (CH)**

(72) Erfinder:
- **FISCH, Gabriela**
  **7000 Chur (CH)**
- **GAUPP, Theo**
  **7204 Untervaz (CH)**
- **SCHÖNFUSS, Dirk**
  **7015 Tamins (CH)**
- **ORTEGA SCHULTE, Claudius-Michael**
  **7402 Bonaduz (CH)**

(74) Vertreter: **PATERIS Patentanwälte PartmbB**
**Postfach 33 07 11**
**80067 München (DE)**

(56) Entgegenhaltungen:
**DE-B- 1 090 451**
**DE-U1- 9 417 267**
**US-A1- 2005 133 369**
**US-A1- 2014 034 516**

EP 3 894 849 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Einstabmesskette und ein Verfahren zum Herstellen der Einstabmesskette.

Unter einer Einstabmesskette wird eine Kombination aus einer Arbeitselektrode und einer Referenzelektrode verstanden, die in einem einzelnen Stab untergebracht sind.

US200513369, DE1090451, DE9417267U und US2014034516 zeigen Beispiele für Einstabmessketten.

Für den Begriff Arbeitselektrode wird auch synonym der Begriff Messelektrode verwendet und für den Begriff Referenzelektrode wird auch synonym der Begriff Bezugselektrode verwendet. Bei der Einstabmesskette kann es sich beispielsweise um einen Redox-Sensor oder um eine pH-Einstabmesskette handeln, mittels der ein pH-Wert bestimmbar ist. Bei der pH-Einstabmesskette kann es sich beispielsweise um eine pH-Glaselektrode handeln.

Bei der Referenzelektrode handelt es sich oftmals um einen Metalldraht, der in eine Salzlösung getaucht ist. Häufig ist die Referenzelektrode eine Silber-Silberchlorid-Elektrode, die einen Silberdraht aufweist, der von einer AgCl-Schicht ummantelt ist, wobei der Silberdraht mit der AgCl-Schicht in eine KCl-Lösung getaucht ist. Problematisch ist, dass KCl via ein Diaphragma der Einstabmesskette aus der Einstabmesskette fließen kann. Dies führt dazu, dass sich die KCl-Konzentration der KCl-Lösung verändert, was wiederum dazu führt, dass sich das elektrochemische Potential der Referenzelektrode ändert. Das sich ändernde elektrochemische Potential führt dazu, dass eine mit der Einstabmesskette durchgeführte Messung fehlerbehaftet ist. Selbst wenn nur ein geringer Massenstrom des KCl aus der Einstabmesskette fließt, so treten die fehlerbehafteten Messungen nach entsprechend langer Zeit auf. Das Problem der fehlerbehafteten Messungen ist insbesondere bei solchen der Einstabmessketten relevant, die eine miniaturisierte Bauweise haben, weil dort der KCl-Lösung nur ein geringer Bauraum zu Verfügung steht. Die Einstabmesskette hat demnach eine begrenzte Lebensdauer, innerhalb derer die Einstabmesskette fehlerfreie Messungen durchführen kann.

Aufgabe der Erfindung ist es daher, eine Einstabmesskette und ein Verfahren zum Herstellen der Einstabmesskette zu schaffen, mit denen eine Lebensdauer der Einstabmesskette verlängerbar ist, wobei innerhalb der Lebensdauer die Einstabmesskette fehlerfreie Messungen durchführen kann.

Die erfindungsgemäße Einstabmesskette wird definiert durch die Merkmale gemäß Anspruch 1.

Im Vergleich zu einer herkömmlichen Einstabmesskette ist bei der erfindungsgemäßen Einstabmesskette das zweite elektrisch leitfähige Fluid nicht nur in dem Referenzraum sondern auch in dem erweiterten Referenzraum angeordnet. Dadurch kann bei der erfindungsgemäßen Einstabmesskette eine größere Menge von dem zweiten elektrisch leitfähigen Fluid als bei der herkömmlichen Einstabmesskette verwendet werden, so dass ein Ausfließen des zweiten elektrisch leitfähigen Fluides und/oder eines darin gelösten Elektrolyts zu einer niedrigeren Konzentrationsänderung als bei der herkömmlichen Einstabmesskette führt. Diese niedrigere Konzentrationsänderung resultiert in einer verlängerten Lebensdauer der Einstabmesskette, wobei innerhalb der Lebensdauer die Einstabmesskette fehlerfreie Messungen durchführen kann. Indem die erste Dichtung das erste Innenrohrlängsende abdichtet, wird erreicht, dass das erste elektrisch leitfähige Fluid nicht in den erweiterten Referenzraum gelangen kann und sich dort mit dem zweiten elektrisch leitfähigen Fluid vermischt.

Erfindungsgemäß wird derjenige Teil der Arbeitselektrode, der in dem erweiterten Referenzraum angeordnet ist, von einer elektrisch isolierenden Schicht ummantelt

Dadurch kann vorteilhaft ein unmittelbarer Ladungstransport zwischen der Arbeitselektrode und dem zweiten elektrisch leitfähigen Fluid unterbunden werden.

Es ist bevorzugt, dass die Referenzelektrode in dem Referenzraum angeordnet ist. Zudem ist bevorzugt, dass die Referenzelektrode in dem erweiterten Referenzraum angeordnet ist. Dabei ist denkbar, dass die Referenzelektrode sich via das Durchgangsloch erstreckt und sowohl in dem Referenzraum als auch in dem erweiterten Referenzraum angeordnet ist. Es ist aber auch denkbar, dass die Referenzelektrode nur in dem Referenzraum oder in nur in dem erweiterten Referenzraum angeordnet ist.

Die Einstabmesskette weist bevorzugt eine Leiterplatte auf, die an dem Innenrohr befestigt ist und an der die Arbeitselektrode und die Referenzelektrode befestigt sind. Dadurch hält die Leiterplatte zum einen die Arbeitselektrode und die Referenzelektrode sowie zum anderen das Innenrohr. Zum Befestigen der Leiterplatte an dem Innenrohr können die Leiterplatte und das Innenrohr miteinander verklebt sein. Wenn die Referenzelektrode in dem erweiterten Referenzraum angeordnet ist, insbesondere wenn die Referenzelektrode vollständig in dem erweiterten Referenzraum angeordnet ist, kann die Leitplatte vorteilhaft besonders klein ausgeführt werden.

Besonders bevorzugt ragt die Leiterplatte in das Innenrohr hinein. Dadurch kann die Leiterplatte besonders fest an dem Innenrohr befestigt werden.

Die Einstabmesskette weist bevorzugt ein Messkabel auf, via das ein Messsignal der Einstabmesskette auslesbar ist und das an der Leiterplatte befestigt ist. Dabei ist besonders bevorzugt, dass die Leiterplatte eine Zugentlastung für das Messkabel aufweist. Zudem ist bevorzugt, dass die Einstabmesskette eines von einem Stecker oder einer Steckdose aufweist, die eingerichtet sind, in das andere der Stecker oder Steckdose einzugreifen, und einen Teil des Messkabels bilden. Dadurch kann vorteilhaft einfach eine Ausleseelektronik zum Auslesen des Messsignals an die Einstabmesskette angeschlossen werden.

Es ist zudem bevorzugt, dass die Einstabmesskette einen weiteren Sensor aufweist, wie beispielsweise einen Temperatursensor, wobei der weitere Sensor ebenfalls an der Leiterplatte befestigt ist. Der weitere Sensor kann sich bis in den Referenzraum, in den erweiterten Referenzraum und/oder in das Innenrohr zwischen dem ersten Innenrohrlängsende und der ersten Dichtung erstrecken.

Es ist bevorzugt, dass das Innenrohr ein Klebstoffdurchgangsloch aufweist, das in dem Bereich der ersten Dichtung angeordnet ist. Via das Klebstoffdurchgangsloch kann die erste Dichtung vorteilhaft einfach in das Innenrohr eingebracht werden, beispielsweise indem ein Klebstoff, beispielsweise mittels einer Spritze, via das Klebstoffdurchgangsloch in das Innenrohr eingebracht wird und der Klebstoff durch sein Aushärten die erste Dichtung bildet. Bei dem Klebstoff kann es sich um einen Silikonkleber handeln.

Die Einstabmesskette weist bevorzugt eine in dem Innenrohr angeordnete zweite Dichtung auf, die zwischen dem Durchgangsloch und dem zweiten Innenrohrlängsende angeordnet ist sowie den erweiterten Referenzraum abdichtet. Dadurch wird erreicht, dass das zweite elektrisch leitfähige Fluid nicht via das zweite Innenrohrlängsende aus dem Innenrohr gelangen kann. Die zweite Dichtung kann in das Innenrohr eingebracht werden, indem ein Klebstoff, insbesondere ein Silikonkleber, via das zweite Innenrohrlängsende in das Innenrohr eingebracht wird, wobei der Klebstoff durch sein Aushärten die zweite Dichtung bildet. Alternativ ist denkbar, dass das Innenrohr ein zweites Klebstoffdurchgangsloch zum Einbringen des Klebstoffs aufweist, das im Bereich der zweiten Dichtung angeordnet ist.

Das weist erfindungsgemäß im Bereich des ersten Innenrohrlängsendes ein erstes Außenrohrlängsende und die Einstabmesskette im Bereich des ersten Außenrohrlängsendes ein Diaphragma auf, das eingerichtet ist, das zweite elektrisch leitfähige Fluid in dem Referenzraum zu halten. Via das Diaphragma ist ein Ladungstransport zwischen dem zweiten elektrisch leitfähigen Fluid und einem in Kontakt mit dem Diaphragma stehenden Messfluid ermöglicht. Dabei ist besonders bevorzugt, dass das Diaphragma ein Hydrogel ist.

Das Innenrohr weist bevorzugt im Bereich des ersten Innenrohrlängsendes eine Glasmembran auf. Via die Glasmembran ist ein Ladungstransport zwischen dem ersten elektrisch leitfähigen Fluid und dem in Kontakt mit der Glasmembran stehenden Messfluides ermöglicht.

Es ist bevorzugt, dass die Einstabmesskette eine pH-Einstabmesskette und/oder ein Redox-Sensor ist. Besonders bevorzugt ist die pH-Einstabmesskette eine pH-Glaselektrode.

Das erfindungsgemäße Verfahren wird definiert durch die Merkmale des Anspruchs 10.

Es ist bevorzugt, dass das Verfahren die Schritte aufweist: - Abdichten eines im Bereich des zweiten Innenrohrlängsendes angeordneten zweiten Außenrohrlängsendes des Außenrohrs und des zweiten Innenrohrlängsendes vor dem Einbringen des zweiten elektrisch leitfähigen Fluides in den Referenzraum und in den erweiterten Referenzraum; - zum Einbringen des zweiten elektrisch leitfähigen Fluides in den Referenzraum und in den erweiterten Referenzraum: Tauchen eines im Bereich des ersten Innenrohrlängsendes angeordneten ersten Außenrohrlängsendes des Außenrohrs in das zweite elektrisch leitfähige Fluid, Einbringen der Einstabmesskette zusammen mit dem zweiten elektrisch leitfähigen Fluid in einen Vakuumbehälter, Evakuieren und anschließendes Belüften des Vakuumbehälters, so dass das zweite elektrisch leitfähige Fluid via einen im Bereich des ersten Außenrohrlängsendes zwischen dem Außenrohr und Innenrohr ausgebildeten Spalt in den Referenzraum eintritt und via das Durchgangsloch in den erweiterten Referenzraum eintritt. Der Spalt hat insbesondere die Form eines Ringspalts.

Dabei handelt es sich um ein einfaches Verfahren zum Befüllen des Referenzraumes und des erweiterten Referenzraumes, bei dem sowohl der Referenzraum als auch der erweiterte Referenzraum gleichzeitig in einem gemeinsamen Verfahrensschritt befüllt werden. Zudem ist es möglich, eine Vielzahl der Einstabmessketten gleichzeitig in das zweite elektrisch leitfähige Fluid zu tauchen und in den Vakuumbehälter zum Evakuieren und Belüften des Vakuumbehälters einzubringen. Dadurch kann das zweite elektrisch leitfähige Fluid gleichzeitig in die Vielzahl der Einstabmessketten eingebracht werden, wodurch das Verfahren kostengünstig ist.

Das Abdichten des zweiten Innenrohrlängsendes kann durch das Vorsehen der zweiten Dichtung erfolgen. Das Abdichten des zweiten Außenrohrlängsendes kann durch Vorsehen eines Dichtrings erfolgen, der zwischen das Innenrohr und das Außenrohr angeordnet wird und den Referenzraum begrenzt.

Es ist bevorzugt, dass vor dem Einbringen des zweiten elektrisch leitfähigen Fluides in den Referenzraum und in den erweiterten Referenzraum in den Spalt im Bereich des ersten Außenrohrlängsendes ein Diaphragma eingebracht wird, das ein Hydrogel ist, welches in einem trockenen Zustand in den Spalt eingebracht wird. Bei dem Hydrogel handelt es sich um eine Substanz, die bei Kontakt mit dem zweiten elektrisch leitfähigen Fluid quillt, insbesondere wenn das zweite elektrische leitfähige Fluid Wasser aufweist. Dadurch kann beim Einbringen des zweiten elektrisch leitfähigen Fluides in den Referenzraum und in den erweiterten Referenzraum das zweite elektrische Fluid zwischen dem Diaphragma und dem Innenrohr und/oder zwischen dem Diaphragma und dem Außenrohr in den Referenzraum strömen. Gleichzeitig saugt sich das Diaphragma mit dem zweiten elektrisch leitfähigen Fluid voll, quillt voll und dichtet somit den Spalt ab, nachdem das zweite elektrisch leitfähige Fluid in den Referenzraum und in den erweiterten Referenzraum geströmt ist.

Es ist bevorzugt, dass das Hydrogels in seinem trockenen Zustand in den Spalt eingebracht wird und dabei das Hydrogel kleiner als der Spalt ist und nach dem Einbringen des zweiten elektrisch leitfähigen Fluides in den Referenzraum und den erweiterten Referenzraum das Diaphragma unter einer Druckspannung steht. Dadurch kann der Spalt besonders dicht abgedichtet werden. Um zu erreichen, dass die Druckspannung entsteht, kann der Fachmann in einem Vorversuch verschieden große Hydrogele, die sich in ihrem trockenen Zustand befinden und kleiner als der Spalt sind, mit dem zweiten elektrisch leitfähigen Fluid kontaktieren und aufquellen lassen. Nach dem Aufquellen wird die Größe der Hydrogele in ihrem aufgequollenen Zustand bestimmt und es kommen für das Diaphragma nur solche der verschieden großen Hydrogele in Frage, die in ihrem aufgequollenen Zustand größer als der Spalt sind. Es können solche der verschieden großen Hydrogele ausgewählt werden, die in ihrem aufgequollen Zustand von 10 % bis 100 % größer als der Spalt sind, insbesondere von 30 % bis 50 % größer als der Spalt. Der Quellgrad Q des Hydrogels kann von 115 % bis 1000 % betragen, insbesondere von 150 % bis 800 %, insbesondere von 180 % bis 350 %. Der Quellgrad Q ist dabei definiert als $Q = (V_Q-V_T)/V_T$, wobei $V_T$ das Volumen des Hydrogels in seinem trockenen Zustand ist und $V_Q$ das Volumen des Hydrogels in seinem mit dem zweiten elektrisch leitfähigen Fluid aufgequollenen Zustand ist.

Es ist bevorzugt, dass das Außenrohr in Form von mindestens zwei Schalen bereitgestellt wird und zum Anordnen des Innenrohrs in dem Außenrohr das Innenrohr in die Schalen eingebracht wird und anschließend die Schalen zu dem Außenrohr zusammengefügt werden. Die Schalen sind dabei bevorzugt so gestaltet, dass sie sich von dem ersten Innenrohrlängsende bis zu dem zweiten Innenrohrlängsende erstrecken. Die Schalen können beispielsweise durch Ultraschallschweißen, Laserschweißen, Schmelzen und/oder Kleben zusammengefügt werden.

Das Innenrohr weist bevorzugt ein Klebstoffdurchgangsloch auf und zum Einbringen der ersten Dichtung in das Innenrohr wird ein Klebstoff via das Klebstoffdurchgangsloch in das Innenrohr eingebracht, der durch sein Aushärten die erste Dichtung bildet.

In dem Fall, dass die Einstabmesskette die Leiterplatte aufweist, können zum Herstellen der Einstabmesskette die Arbeitselektrode und die Referenzelektrode an der Leiterplatte befestigt werden. Anschließend kann die Arbeitselektrode in das das erste elektrisch leitfähige Fluid aufweisende Innenrohr eingebracht werden. Optional kann auch die Referenzelektrode in das Innenrohr eingebracht werden. Anschließend wird die erste Dichtung in das Innenrohr eingebracht. Dann wird die zweite Dichtung in das Innenrohr eingebracht, indem ein Klebstoff, insbesondere ein Silikonklebstoff, in das Innenrohr eingebracht wird, der die Leiterplatte an dem Innenrohr befestigt. Der Klebstoff kann via ein zweites Klebstoffdurchgangsloch in das Innenrohr eingebracht werden. Alternativ ist denkbar, dass der Klebstoff via ein in der Leiterplatte angeordnetes Leiterplattenloch oder via eine zwischen der Leiterplatte und dem Innenrohr angeordnete Lücke in das Innenrohr eingebracht wird. Die zweite Dichtung isoliert zudem die Arbeitselektrode und die optional vorgesehene Referenzelektrode gegenüber der Umgebung und gegeneinander.

Folgende weitere Ausgestaltungen sind für die Einstabmesskette und/oder das Verfahren zum Herstellen der Einstabmesskette denkbar: Es ist denkbar, dass es sich bei dem Innenrohr um ein Innenrohr aus Glas und/oder Kunststoff handelt. Es ist denkbar, dass es sich bei dem Außenrohr um ein Außenrohr aus Glas und/oder Kunststoff handelt. Das Innenrohr kann mehrere der Durchgangslöcher aufweisen, die den Referenzraum fluidleitend mit dem erweiterten Referenzraum verbinden. Dadurch kann der Stoffaustausch zwischen dem Referenzraum und dem erweiterten Referenzraum erhöht werden. Das Durchgangsloch kann die Form eines Schlitzes haben. Auch dadurch kann der Stoffaustausch zwischen dem Referenzraum und dem erweiterten Referenzraum erhöht werden. Es können auch mehrere der Schlitze vorgesehen sein, die den Referenzraum mit dem erweiterten Referenzraum fluidleitend verbinden. Der Referenzraum und der erweiterte Referenzraum können vollständig mit dem zweiten elektrisch leitfähigen Fluid gefüllt sein. Der in dem Innenrohr zwischen dem ersten Innenrohrlängsende und der ersten Dichtung angeordnete Raum kann vollständig mit ersten elektrisch leitfähigen Fluid gefüllt sein.

Das Hydrogel weist bevorzugt ein thermoplastisches Polyurethan auf. Insbesondere besteht das Hydrogel im Wesentlichen aus dem thermoplastischen Polyurethan. Das thermoplastische Polyurethan ist bevorzugt ein Blockcopolymer, das ein Monomer A

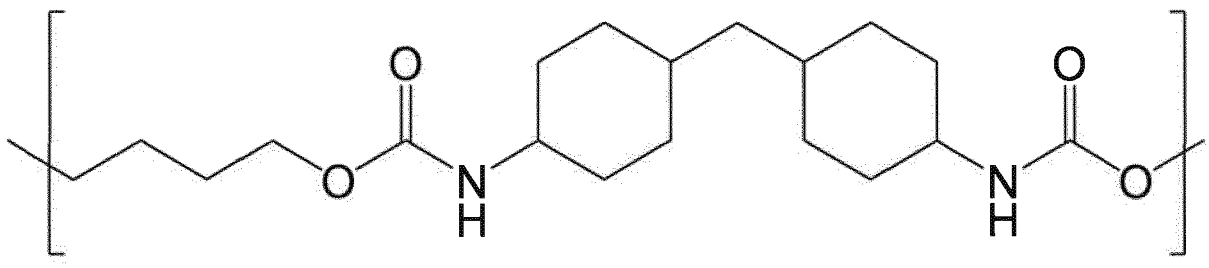

A

und ein Monomer B aufweist:

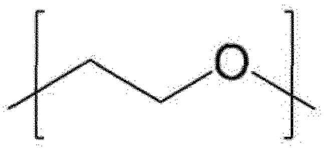

B

Das Monomer ist dabei jeweils von dem Bereich gebildet, der sich von der linken Klammer bis zu der rechten Klammer erstreckt. In dem Blockcopolymer kann an der linken Seite des Monomers A ein Sauerstoffatom angebunden sein oder es kann dort zum Terminieren des Blockcopolymers eine Hydroxylgruppe angebunden sein. An der rechten Seite des Monomers A kann ein Kohlenstoffatom angebunden sein oder es kann dort zum Terminieren des Blockcopolymers ein Wasserstoffatom angebunden sein. An der linken Seite des Monomers B kann ein Sauerstoffatom angebunden sein oder es kann dort zum Terminieren des Blockcopolymers eine Hydroxylgruppe angebunden sein. An der rechten Seite des Monomers B kann ein Kohlenstoffatom angebunden sein oder es kann dort zum Terminieren des Blockcopolymers ein Wasserstoffatom angebunden sein. Das Blockcopolymer kann im Wesentlichen aus Blöcken des Monomers A und Blöcken des Monomers B und Endgruppen zum Terminieren des Blockcopolymers bestehen. Bei den Endgruppen kann es sich um die vorgenannten Hydroxylgruppen und/oder die vorgenannten Wasserstoffatome handeln.

Es ist bevorzugt, dass das Massenverhältnis aus dem Monomer B zu dem Monomer A von 20 bis 100 beträgt, insbesondere von 30 bis 90.

Es ist bevorzugt, dass die zahlenmittlere molare Masse $\overline{M}$ des Blockcopolymers von $50^{*}10^3$ g/mol bis $180^{*}10^3$ g/mol beträgt, insbesondere von $80^{*}10^3$ g/mol bis $150^{*}10^3$ g/mol. Für die zahlenmittlere molare Masse $\overline{M}$ gilt: $\overline{M} = \frac{\sum_i^n M_i}{n}$, wobei n die Anzahl der Polymerketten des Blockcopolymers ist und $M_i$ die molare Masse der Polymerkette i ist.

Das Blockcopolymer ist kommerziell unter dem Markennamen Tecophilic® der Firma Lubrizol erwerblich. Als Beispiel hierfür kommen Tecophilic® TG-500 und/oder Tecophilic® TG-2000 in Frage. Das Massenverhältnis aus dem Monomer B zu dem Monomer A beträgt bei Tecophilic® TG-500 circa 40 und bei Tecophilic® TG-2000 circa 82. Die zahlenmittlere molare Masse $\overline{M}$ des Blockcopolymers beträgt bei Tecophilic® TG-500 circa $1{,}4^{*}10^5$ g/mol und bei Tecophilic® TG-2000 circa $8^{*}10^4$ g/mol.

Das Hydrogel kann beispielsweise auch ein Polymer aufweisen, das in weichen Kontaktlinsen verwendet wird. Als Beispiele hierfür kommen Hydroxyethylmethacrylate, Vinylpyrrolidone und/oder Silikonhydrogele in Frage. Das Hydrogel kann ein thermoplastisches Elastomer sein. Das Hydrogel kann ein smartes Hydrogel sein. Insbesondere kann das smarte Hydrogel salzresponsiv und/oder thermoresponsiv sein. Ein beispiel für ein smartes Hydrogel, was sowohl salzresponsiv als auch thermoresponsiv ist, ist das vorgenannte Tecophilic®. Ein anderes Beispiel für ein smartes Hydrogel, das thermoresponsiv ist, ist ein Polymer auf Basis von N-Isopropylacrylamid-Copolymeren.

Die Arbeitselektrode und die Referenzelektrode können ein Metall aufweisen. Das erste elektrisch leitfähige Fluid und das zweite elektrisch leitfähige Fluid können eine Salzlösung aufweisen, insbesondere eine wässrige Salzlösung. Bei der Arbeitselektrode kann es sich um eine Silber-Silberchlorid-Elektrode handeln. Das erste elektrisch leitfähige Fluid kann eine wässrige KCl-Lösung sein. Das erste elektrisch leitfähige Fluid kann zudem einen Puffer aufweisen, wie beispielsweise einen Acetatpuffer und/oder einen Phosphatpuffer. Bei der Referenzelektrode kann es sich um eine Silber-Silberchlorid-Elektrode handeln. Das zweite elektrisch leitfähige Fluid kann eine wässrige KCl-Lösung sein. Die KCl-Konzentration des zweiten elektrisch leitfähigen Fluides kann beispielsweise 3 mol/l betragen.

Im Folgenden wird anhand der beigefügten schematischen Zeichnungen die Erfindung näher erläutert. Figur 1 zeigt eine erste Ausführungsform einer Einstabmesskette 1 und Figur 2 zeigt eine zweite Ausführungsform der Einstabmesskette 1.

Bei der Einstabmesskette 1 kann es sich um eine pH-Einstabmesskette und/oder einen Redox-Sensor handeln. Bei der pH-Einstabmesskette kann es sich um eine pH-Glaselektrode handeln. Bei der ersten Ausführungsform und der zweiten Ausführungsform handelt es sich um die pH-Glaselektrode.

Wie es aus Figuren 1 und 2 ersichtlich ist, weist eine Einstabmesskette 1 ein Innenrohr 5 und ein Außenrohr 4 auf, das um das Innenrohr 5 angeordnet ist, so dass zwischen dem Innenrohr 5 und dem Außenrohr 4 ein Ringspalt ausgebildet ist. Das Innenrohr 5 weist ein erstes Innenrohrlängsende 19, das geschlossen ausgebildet ist, und ein zweites Innenrohrlängsende 20 auf. Analog weist das Außenrohr 4 ein erstes Außenrohrlängsende 23, das im Bereich des ersten Innenrohrlängsendes 19 angeordnet ist, und ein zweites Außenrohrlängsende 24 auf, das im Bereich des zweiten Innenrohrlängsendes 20 angeordnet ist. Die Einstabmesskette 1 weist eine erste Dichtung 12 auf, die in dem

Innenrohr 5 angeordnet ist und das erste Innenrohrlängsende 19 abdichtet. Zudem weist die Einstabmesskette ein erstes elektrisch leitfähiges Fluid 6 auf, das in dem Innenrohr 5 zwischen dem ersten Innenrohrlängsende 19 und der ersten Dichtung 12 angeordnet und gehalten ist, so dass es nicht aus diesem Bereich austreten kann.

Das Außenrohr 4 und das Innenrohr 5 begrenzen einen zwischen dem Außenrohr 4 und dem Innenrohr 5 angeordneten Referenzraum 21, der im Wesentlichen die Form eines Ringraumes hat. Innerhalb des Innenrohrs 5 ist ein erweiterter Referenzraum 22 in einem Bereich zwischen der ersten Dichtung 12 und dem zweiten Innenrohrlängsende 20 angeordnet. Das Innenrohr 5 weist ein Durchgangsloch 10 auf, das zwischen der ersten Dichtung 12 und dem zweiten Innenrohrlängsende 20 angeordnet ist und den Referenzraum 21 fluidleitend mit dem erweiterten Referenzraum 22 verbindet. Die Einstabmesskette 1 weist ein zweites elektrisch leitfähiges Fluid 7 auf, das in dem Referenzraum 21 und dem erweiterten Referenzraum 22 angeordnet ist. Zudem weist die Einstabmesskette 1 eine Arbeitselektrode 2 auf, die sich ausgehend von dem zweiten Innenrohrlängsende 20 via die erste Dichtung 12 bis in das erste leitfähige Fluid 6 erstreckt, so dass die Arbeitselektrode 2 mit dem ersten leitfähigen Fluid 6 in Kontakt steht. Außerdem weist die Einstabmesskette 1 eine Referenzelektrode 3 auf, die in Kontakt mit dem zweiten leitfähigen Fluid 7 steht.

Die Einstabmesskette 1 weist im Bereich des ersten Außenrohrlängsendes 23 ein Diaphragma 14 auf, das in den Ringspalt eingebracht ist und eingerichtet ist, das zweite elektrisch leitfähige Fluid 7 in dem Referenzraum 21 zu halten. Bei dem Diaphragma 14 kann es sich um ein Hydrogel handeln. Das Innenrohr 5 weist im Bereich des ersten Innenrohrlängsendes 19 eine Glasmembran 9 auf. Das Diaphragma 14 und die Glasmembran 9 sind eingerichtet, das zweite elektrisch leitfähige Fluid 7 beziehungsweise das erste elektrisch leitfähige Fluid 6 in der Einstabmesskette 1 zu halten, jedoch einen Ladungstransport mit einem Messfluid zu erlauben, das in Kontakt mit dem Diaphragma 14 und der Glasmembran 9 steht. Daher sind im Betrieb der Einstabmesskette 1 das erste Innenrohrlängsende 19 und das erste Außenrohrlängsende 23 in das Messfluid zu halten. Bei dem Messfluid kann es sich beispielsweise um eine Messlösung handeln, insbesondere eine wässrige Messlösung.

Wie es aus Figuren 1 und 2 ersichtlich ist, weist die Einstabmesskette 1 eine in dem Innenrohr 5 angeordnete zweite Dichtung 13 auf, die zwischen dem Durchgangsloch 10 und dem zweiten Innenrohrlängsende 20 angeordnet ist sowie den erweiterten Referenzraum 22 abdichtet. Der erweiterte Referenzraum 22 erstreckt sich somit in dem Innenrohr 5 von der ersten Dichtung 12 bis zu der zweiten Dichtung 13. Derjenige Teil der Arbeitselektrode 2, der in dem erweiterten Referenzraum 22 angeordnet ist, ist von einer elektrisch isolierenden Schicht 25 ummantelt, die das zweite elektrisch leitfähige Fluid 7 von der Arbeitselektrode 2 trennt, so dass ein unmittelbarer Ladungstransport zwischen der Arbeitselektrode 2 und dem zweiten elektrisch leitfähigen Fluid 7 unterbunden ist. Auch derjenige Teil der Arbeitselektrode 2, der in dem Innenrohr 5 zwischen der zweiten Dichtung 13 und dem zweiten Innenrohrlängsende 20 angeordnet ist, kann von der elektrisch isolierenden Schicht 25 ummantelt sein. Darüber hinaus kann auch derjenige Teil der Arbeitselektrode 2, der sich außerhalb des Innenrohrs 5 befindet, von der elektrisch isolierenden Schicht 25 ummantelt sein. Die elektrisch isolierende Schicht 25 kann sich ausgehend von der zweiten Dichtung 13 bis mindestens zu der ersten Dichtung 12 erstrecken. Die elektrisch isolierende Schicht 25 kann sich darüber hinaus noch bis in dem zwischen dem ersten Innenrohrlängsende 19 und der ersten Dichtung 12 angeordneten Raum erstrecken, so lange ein von der elektrisch isolierenden Schicht 25 freier Bereich der Arbeitselektrode 2 mit dem ersten elektrisch leitfähigen Fluid kontaktiert.

Figuren 1 und 2 zeigen zudem, dass die Einstabmesskette 1 einen Dichtring 18 aufweist, der im Bereich des zweiten Innenrohrlängsendes 20 und des zweiten Außenrohrlängsendes 24 in dem Ringspalt zwischen dem Außenrohr 4 und dem Innenrohr 5 angeordnet ist und den Referenzraum 21 abdichtet. Damit erstreckt sich der Referenzraum 21 von dem Diaphragma 14 bis zu dem Dichtring 18.

Die Einstabmesskette 1 kann eine Leiterplatte (nicht dargestellt) aufweisen, die an dem Innenrohr 5 im Bereich des zweiten Innenrohrlängsendes 20 befestigt ist und an der die Arbeitselektrode 2 und die Referenzelektrode 3 befestigt sind. Dabei ist denkbar, dass die Leiterplatte in das Innenrohr 5 hinein ragt. Zudem ist denkbar, dass die zweite Dichtung 13 einen Kleber, insbesondere einen Silikonkleber, aufweist, der die Leiterplatte an dem Innenrohr 5 befestigt. Durch sein Aushärten bildet der Kleber die zweite Dichtung 13. Das Innenrohr 5 kann im Bereich der zweiten Dichtung 13 ein zweites Klebstoffdurchgangsloch aufweisen, via das der Kleber in das Innenrohr 5 einbringbar ist.

Wie es aus Figur 1 ersichtlich ist, ist bei der ersten Ausführungsform der Einstabmesskette 1 die Referenzelektrode 3 in dem Referenzraum 21 angeordnet. Insbesondere ist die Referenzelektrode 3 nur in dem Referenzraum 21 und nicht in dem erweiterten Referenzraum 22 angeordnet. Wie es aus Figur 2 ersichtlich ist, ist bei der zweiten Ausführungsform der Einstabmesskette 1 die Referenzelektrode 3 in dem erweiterten Referenzraum 22 angeordnet. Insbesondere ist die Referenzelektrode 3 nur in dem erweiterten Referenzraum 22 und nicht in dem Referenzraum 21 angeordnet. Bei der zweiten Ausführungsform ist es vorteilhaft, wenn auch derjenige Teil der Arbeitselektrode 2, der in dem Innenrohr 5 zwischen der zweiten Dichtung 13 und dem zweiten Innenrohrlängsende 20 angeordnet ist, von der elektrisch isolierenden Schicht 25 ummantelt ist, weil dann die Arbeitselektrode 2 und die Referenzelektrode 3 sich nicht kontaktieren können.

Figuren 1 und 2 zeigen, dass das Innenrohr 5 ein Klebstoffdurchgangsloch 11 aufweist, das in dem Bereich der ersten Dichtung 12 angeordnet ist und via das ein Kleber, insbesondere ein Silikonkleber, in das Innenrohr 5 einbringbar ist. Der Kleber bildet durch sein Aushärten die erste Dichtung 12.

Wie es aus Figuren 1 und 2 ersichtlich ist, weist die Einstabmesskette 1 ein Kopfteil 16 auf, das das Außenrohr 4 an seinem zweiten Außenrohrlängsende 24 umschließt. Zudem steht das Kopfteil 16 von dem zweiten Außenrohrlängsende 24 ab. Das Kopfteil 16 weist in seinem Inneren einen Hohlraum auf, der mit einer Vergussmasse 17 gefüllt ist. Die Vergussmasse 17 dichtet zusätzlich zu dem Dichtring 18 und der zweiten Dichtung 13 ein weiteres Mal ab. Bei der Vergussmasse 17 kann es sich um einen Silikonkleber handeln. Durch das Vorsehen der Vergussmasse 17 können die Arbeitselektrode 2 und die Referenzelektrode 3 gegeneinander und gegen die Umgebung elektrisch isoliert werden.

Das Innenrohr 5 weist an seinem ersten Innenrohrlängsende 19 ein Vorratsgefäß 8 auf, das einen größeren Innenquerschnitt als das restliche Innenrohr 5 hat, so dass eine größere Menge an dem ersten elektrisch leitfähigen Fluid 6 als ohne das Vorratsgefäß 8 in das Innenrohr 5 einbringbar ist.

Die Einstabmesskette 1 weist einen Stöpsel 15 auf, der in dem Ringspalt auf der dem Referenzraum 21 abgewandten Seite des Diaphragmas 14 angeordnet ist und das Diaphragma 14 abstützt. Der Stöpsel 15 ist durchlässig für das Messfluid. Dazu kann der Stöpsel ein oder mehrere Stöpseldurchgangslöcher aufweisen und/oder der Stöpsel kann porös sein.

Bei der pH-Glaselektrode gemäß Figuren 1 und 2 kann das erste elektrisch leitfähige Fluid ein Innenpuffer 6a sein. Der Innenpuffer 6a kann eine wässrige KCl-Lösung aufweisen. Als Puffer kommen beispielsweise ein Acetatpuffer und/oder ein Phosphatpuffer in Frage. Das zweite elektrisch leitfähige Fluid 7 kann eine wässrige Lösung sein, insbesondere eine wässrige KCl-Lösung 7a. Es ist denkbar, dass die KCl-Konzentration der wässrigen KCl-Lösung 7a 3 mol/l beträgt. Bei der Arbeitselektrode 2 und der Referenzelektrode 3 kann es sich jeweils um eine Silber-Silberchlorid-Elektrode handeln. Damit hätte die pH-Glaselektrode folgende elektrochemische Reihe: Ag(s) | AgCl(s) | $K^+(aq)Cl^-(aq)$ ‖ Glasmembran 9 ‖ Messfluid ‖ Diaphragma 14 ‖ $K^+(aq)Cl^-(aq)$ | AgCl(s) | Ag(s). Zwischen den beiden Ag(s)-Elementen kann nun ein elektrisches Potential gemessen werden. Anhand des elektrischen Potentials kann auf den pH-Wert des Messfluides zurückgeschlossen werden.

Die Einstabmesskette kann wie folgt hergestellt werden:

- Bereitstellen des Innenrohrs 5;
- Bereitstellen des Außenrohrs 4;
- Einfüllen des ersten elektrisch leitfähigen Fluides 6 in das Innenrohr 5;
- Einbringen der Arbeitselektrode 2 in das Innenrohr 5;
- Einbringen der ersten Dichtung 12 in das Innenrohr 5 zwischen dem Durchgangsloch 10 und dem ersten Innenrohrlängsende 19, so dass das erste elektrisch leitfähige Fluid 6 von der ersten Dichtung 12 im Bereich des ersten Innenrohrlängsendes 19 begrenzt ist, sich die Arbeitselektrode 2 via die erste Dichtung 12 bis in das erste elektrisch leitfähige Fluid 6 erstreckt und der erweiterte Referenzraum 22 gebildet wird;
- Anordnen des Innenrohrs 5 in dem Außenrohr 4, so dass der Referenzraum 21 gebildet wird, der via das Durchgangsloch 10 fluidleitend mit dem erweiterten Referenzraum 22 verbunden ist;
- Einbringen der Referenzelektrode 3 in den Referenzraum 21 und/oder in den erweiterten Referenzraum 22;
- Einbringen eines zweiten elektrisch leitfähigen Fluides 7 in den Referenzraum 21 und in den erweiterten Referenzraum 22, so dass das zweite elektrisch leitfähige Fluid 7 die Referenzelektrode 3 kontaktiert, indem zuerst das zweite Außenrohrlängsende 24 und das zweite Innenrohrlängsende 20 abgedichtet werden. Das Abdichten des zweiten Außenrohrlängsendes 24 kann durch Einbringen des Dichtrings 18 in den Ringspalt erfolgen. Das Abdichten des zweiten Innenrohrlängsendes 20 kann durch Einbringen der zweiten Dichtung 13 in das Innenrohr 5 erfolgen. Zusätzlich können das zweite Außenrohrlängsende 24 und das zweite Innenrohrlängsende 20 abgedichtet werden, indem das Kopfteil 16 an dem Außenrohr 4 angebracht wird und in den Hohlraum des Kopfteils 16 die Vergussmasse 17 eingebracht wird. Anschließend wird das erste Außenrohrlängsende 23 in das zweite elektrisch leitfähige Fluid 7 getaucht und die Einstabmesskette 1 wird zusammen mit dem zweiten elektrisch leitfähigen Fluid 7 in einen Vakuumbehälter eingebracht, beispielsweise einen Exsikkator. Danach wird der Vakuumbehälter evakuiert und anschließend wieder belüftet, so dass das zweite elektrisch leitfähige Fluid 7 via den Ringspalt in den Referenzraum 21 eintritt und via das Durchgangsloch 10 in den erweiterten Referenzraum 22 eintritt. Hier ist es besonders vorteilhaft, wenn das zweite Außenrohrlängsende 24 und das zweite Innenrohrlängsende 20 zusätzlich von der Vergussmasse 17 abgedichtet sind, weil dann beim Belüften des Vakuumbehälters sichergestellt ist, dass keine Luft via das zweite Außenrohrlängsende 24 und das zweite Innenrohrlängsende 20 in den Referenzraum 21 und den erweiterten Referenzraum 22 eintritt. Damit können der Referenzraum 21 und der erweiterte Referenzraum 22 vollständig mit

dem zweiten elektrisch leitfähigen Fluid 7 gefüllt werden. Der Vakuumbehälter kann bis zum einem Druck von 50 mbar bis 100 mbar, insbesondere 80 mbar, evakuiert werden.

Es ist denkbar, dass vor dem Einbringen des zweiten elektrisch leitfähigen Fluides 7 in den Referenzraum 21 und in den erweiterten Referenzraum 22 in den Spalt im Bereich des ersten Außenrohrlängsendes 23 ein Diaphragma 14 eingebracht wird, das ein Hydrogel ist, welches in seinem trockenen Zustand in den Spalt eingebracht wird. Dadurch quillt das Hydrogel auf, wenn es mit dem zweiten elektrisch leitfähigen Fluid 7 in Kontakt kommt, insbesondere wenn das zweite elektrisch leitfähige Fluid 7 Wasser aufweist. Dadurch dichtet das Hydrogel den Referenzraum 21 erst ab, wenn der Referenzraum 21 und der erweiterte Referenzraum 22 mit dem zweiten elektrisch leitfähigen Fluid gefüllt 7 sind.

Das Hydrogel weist bevorzugt ein thermoplastisches Polyurethan auf. Insbesondere besteht das Hydrogel im Wesentlichen aus dem thermoplastischen Polyurethan. Das thermoplastische Polyurethan ist bevorzugt ein Blockcopolymer, das ein Monomer A

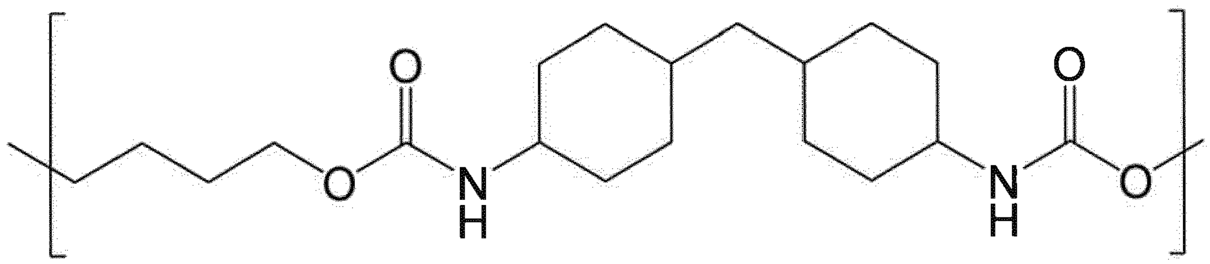

A

und ein Monomer B aufweist:

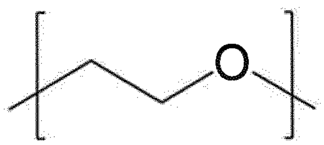

B

An der linken Seite des Monomers A kann ein Sauerstoffatom angebunden sein oder es kann dort zum Terminieren des Blockcopolymers eine Hydroxylgruppe angebunden sein. An der rechten Seite des Monomers A kann ein Kohlenstoffatom angebunden sein oder es kann dort zum Terminieren des Blockcopolymers ein Wasserstoffatom angebunden sein. An der linken Seite des Monomers B kann ein Sauerstoffatom angebunden sein oder es kann dort zum Terminieren des Blockcopolymers eine Hydroxylgruppe angebunden sein. An der rechten Seite des Monomers B kann ein Kohlenstoffatom angebunden sein oder es kann dort zum Terminieren des Blockcopolymers ein Wasserstoffatom angebunden sein. Das Blockcopolymer kann im Wesentlichen aus Blöcken des Monomers A und Blöcken des Monomers B und Endgruppen zum Terminieren des Blockcopolymers bestehen. Bei den Endgruppen kann es sich um die vorgenannten Hydroxylgruppen und/oder die vorgenannten Wasserstoffatome handeln.

Es ist bevorzugt, dass das Massenverhältnis aus dem Monomer B zu dem Monomer A von 20 bis 100 beträgt, insbesondere von 30 bis 90.

Es ist bevorzugt, dass die zahlenmittlere molare Masse $\overline{M}$ des Blockcopolymers von $50*10^3$g/mol bis $180*10^3$g/mol beträgt, insbesondere von $80*10^3$g/mol bis $150*10^3$ g/mol. Für die zahlenmittlere molare Masse $\overline{M}$ gilt:

$\overline{M} = \frac{\sum_i^n Mi}{n}$, wobei n die Anzahl der Polymerketten des Blockcopolymers ist und $M_i$ die molare Masse der Polymerkette *i* ist.

Das Blockcopolymer ist kommerziell unter dem Markennamen Tecophilic® der Firma Lubrizol erwerblich. Als Beispiel hierfür kommen Tecophilic® TG-500 und/oder Tecophilic® TG-2000 in Frage. Das Massenverhältnis aus dem Monomer B zu dem Monomer A beträgt bei Tecophilic® TG-500 circa 40 und bei Tecophilic® TG-2000 circa 82. Die

zahlenmittlere molare Masse $\overline{M}$ des Blockcopolymers beträgt bei Tecophilic® TG-500 circa 1,4*10$^5$ g/mol und bei Tecophilic® TG-2000 circa 8*10$^4$ g/mol.

Das Hydrogel kann beispielsweise auch ein Polymer aufweisen, das in weichen Kontaktlinsen verwendet wird. Als Beispiele hierfür kommen Hydroxyethylmethacrylate, Vinylpyrrolidone und/oder Silikonhydrogele in Frage. Das Hydrogel kann ein thermoplastisches Elastomer sein. Das Hydrogel kann ein smartes Hydrogel sein. Insbesondere kann das smarte Hydrogel salzresponsiv und/oder thermoresponsiv sein. Ein beispiel für ein smartes Hydrogel, was sowohl salzresponsiv als auch thermoresponsiv ist, ist das vorgenannte Tecophilic®. Ein anderes Beispiel für ein smartes Hydrogel, das thermoresponsiv ist, ist ein Polymer auf Basis von N-Isopropylacrylamid-Copolymeren.

Das Hydrogel kann in seinem trockenen Zustand in den Spalt eingebracht werden und dabei kann das Hydrogel kleiner als der Spalt sein und nach dem Einbringen des zweiten elektrisch leitfähigen Fluides in den Referenzraum und den erweiterten Referenzraum kann das Diaphragma unter einer Druckspannung stehen. Dadurch kann der Spalt besonders dicht abgedichtet werden. Um zu erreichen, dass die Druckspannung entsteht, kann der Fachmann in einem Vorversuch verschieden große Hydrogele, die sich in ihrem trockenen Zustand befinden und kleiner als der Spalt sind, mit dem zweiten elektrisch leitfähigen Fluid kontaktieren und aufquellen lassen. Nach dem Aufquellen wird die Größe der Hydrogele in ihrem aufgequollenen Zustand bestimmt und es kommen für das Diaphragma nur solche der verschieden großen Hydrogele in Frage, die in ihrem aufgequollenen Zustand größer als der Spalt sind. Es können solche der verschieden großen Hydrogele ausgewählt werden, die in ihrem aufgequollen Zustand von 10 % bis 100 % größer als der Spalt sind, insbesondere von 30 % bis 50 % größer als der Spalt. Der Quellgrad Q des Hydrogels kann von 115 % bis 1000 % betragen, insbesondere von 150 % bis 800 %, insbesondere von 180 % bis 350 %. Der Quellgrad Q ist dabei definiert als $Q = (V_Q - V_T)/V_T$, wobei $V_T$ das Volumen des Hydrogels in seinem trockenen Zustand ist und $V_Q$ das Volumen des Hydrogels in seinem mit dem zweiten elektrisch leitfähigen Fluid aufgequollenen Zustand ist.

Bezugszeichenliste

1 Einstabmesskette
2 Arbeitselektrode
3 Referenzelektrode
4 Außenrohr
5 Innenrohr
6 erstes elektrisch leitfähiges Fluid
6a Innenpuffer
7 zweites elektrisch leitfähiges Fluid
7a KCl-Lösung
8 Vorratsgefäß
9 Glasmembran
10 Durchgangsloch
11 Klebstoffdurchgangsloch
12 erste Dichtung
13 zweite Dichtung
14 Diaphragma
15 Stöpsel
16 Kopfteil
17 Vergussmasse
18 Dichtring
19 erstes Innenrohrlängsende
20 zweites Innenrohrlängsende
21 Referenzraum
22 erweiterter Referenzraum
23 erstes Außenrohrlängsende
24 zweites Außenrohrlängsende
25 elektrisch isolierende Schicht

## Patentansprüche

1. Einstabmesskette (1) mit einem Innenrohr (5), das ein erstes Innenrohrlängsende (19), das geschlossen ausgebildet ist, und ein zweites Innenrohrlängsende (20) aufweist, einer ersten in dem Innenrohr (5) angeordneten Dichtung (12), die das erste Innenrohrlängsende (19) abdichtet, einem ersten elektrisch leitfähigen Fluid (6), das in dem Innenrohr (5) zwischen dem ersten Innenrohrlängsende (19) und der ersten Dichtung (12) angeordnet ist, einem Außenrohr (4), das um das Innenrohr (5) angeordnet ist und einen zwischen dem Außenrohr (4) und dem Innenrohr (5) angeordneten Referenzraum (21) begrenzt, einem in dem Innenrohr (5) angeordneten Durchgangsloch (10), das zwischen der ersten Dichtung (12) und dem zweiten Innenrohrlängsende (20) angeordnet ist und den Referenzraum (21) fluidleitend mit einem innerhalb des Innenrohrs (5) angeordneten erweiterten Referenzraum (22) verbindet, der in einem Bereich zwischen der ersten Dichtung (12) und dem zweiten Innenrohrlängsende (20) angeordnet ist, einem zweiten elektrisch leitfähigen Fluid (7), das in dem Referenzraum (21) und dem erweiterten Referenzraum (22) angeordnet ist, einer Arbeitselektrode (2), die sich via die erste Dichtung (12) bis in das erste leitfähige Fluid (6) erstreckt, und einer Referenzelektrode (3), die in Kontakt mit dem zweiten leitfähigen Fluid (7) steht, wobei derjenige Teil der Arbeitselektrode (2), der in dem erweiterten Referenzraum (22) angeordnet ist, von einer elektrisch isolierenden Schicht (25) ummantelt ist, wobei das Außenrohr (4) im Bereich des ersten Innenrohrlängsendes (19) ein erstes Außenrohrlängsende (23) aufweist und die Einstabmesskette (1) im Bereich des ersten Außenrohrlängsendes (23) ein Diaphragma (14) aufweist, das eingerichtet ist, das zweite elektrisch leitfähige Fluid (7) in dem Referenzraum (21) zu halten.

2. Einstabmesskette (1) gemäß Anspruch 1, wobei die Referenzelektrode (3) in dem Referenzraum (21) angeordnet ist.

3. Einstabmesskette (1) gemäß Anspruch 1 oder 2, wobei die Referenzelektrode (3) in dem erweiterten Referenzraum (22) angeordnet ist.

4. Einstabmesskette (1) gemäß einem der Ansprüche 1 bis 3, wobei die Einstabmesskette (1) eine Leiterplatte aufweist, die an dem Innenrohr (5) befestigt ist und an der die Arbeitselektrode (2) und die Referenzelektrode (3) befestigt sind.

5. Einstabmesskette (1) gemäß einem der Ansprüche 1 bis 4, wobei das Innenrohr (5) ein Klebstoffdurchgangsloch (11) aufweist, das in dem Bereich der ersten Dichtung (12) angeordnet ist.

6. Einstabmesskette (1) gemäß einem der Ansprüche 1 bis 5, wobei die Einstabmesskette (1) eine in dem Innenrohr (5) angeordnete zweite Dichtung (13) aufweist, die zwischen dem Durchgangsloch (10) und dem zweiten Innenrohrlängsende (20) angeordnet ist sowie den erweiterten Referenzraum (22) abdichtet.

7. Einstabmesskette (1) gemäß einem der Ansprüche 1 bis 6, wobei das Diaphragma (14) ein Hydrogel ist.

8. Einstabmesskette (1) gemäß einem der Ansprüche 1 bis 7, wobei das Innenrohr (5) im Bereich des ersten Innenrohrlängsendes (19) eine Glasmembran (9) aufweist.

9. Einstabmesskette (1) gemäß einem der Ansprüche 1 bis 8, wobei die Einstabmesskette (1) eine pH-Einstabmesskette und/oder ein Redox-Sensor ist, insbesondere wobei die pH-Einstabmesskette eine pH-Glaselektrode ist.

10. Verfahren zum Herstellen einer Einstabmesskette (1), mit den Schritten:

- Bereitstellen eines Innenrohrs (5), das ein erstes Innenrohrlängsende (19), das geschlossen ausgebildet ist, ein zweites Innenrohrlängsende (20) und ein Durchgangsloch (10) aufweist;
- Bereitstellen eines Außenrohrs (4);
- Einfüllen eines ersten elektrisch leitfähigen Fluides (6) in das Innenrohr (5);
- Einbringen einer Arbeitselektrode (2) in das Innenrohr (5);
- Einbringen einer ersten Dichtung (12) in das Innenrohr (5) zwischen dem Durchgangsloch (10) und dem ersten Innenrohrlängsende (19), so dass das erste elektrisch leitfähige Fluid (6) von der ersten Dichtung (12) im Bereich des ersten Innenrohrlängsendes (19) begrenzt ist, sich die Arbeitselektrode (2) via die erste Dichtung (12) bis in das erste elektrisch leitfähige Fluid (6) erstreckt und ein innerhalb des Innenrohrs (5) angeordneter erweiterter Referenzraum (22) gebildet wird, der in einem Bereich zwischen der ersten Dichtung (12) und dem zweiten Innenrohrlängsende (20) angeordnet ist;
- Anordnen des Innenrohrs (5) in dem Außenrohr (4), so dass ein Referenzraum (21) gebildet wird, der zwischen dem Außenrohr (4) und dem Innenrohr (5) angeordnet ist und via das Durchgangsloch (10) fluidleitend mit dem

erweiterten Referenzraum (22) verbunden ist;
- Einbringen einer Referenzelektrode (3) in den Referenzraum (21) und/oder in den erweiterten Referenzraum (22);
- Einbringen eines zweiten elektrisch leitfähigen Fluides (7) in den Referenzraum (21) und in den erweiterten Referenzraum (22), so dass das zweite elektrisch leitfähige Fluid (7) die Referenzelektrode (3) kontaktiert,

wobei derjenige Teil der Arbeitselektrode (2), der in dem erweiterten Referenzraum (22) angeordnet ist, von einer elektrisch isolierenden Schicht (25) ummantelt ist,
wobei das Außenrohr (4) im Bereich des ersten Innenrohrlängsendes (19) ein erstes Außenrohrlängsende (23) aufweist und ein Diaphragma (14) im Bereich des ersten Außenrohrlängsendes (23) eingebracht wird, das eingerichtet ist, das zweite elektrisch leitfähige Fluid (7) in dem Referenzraum (21) zu halten.

**11.** Verfahren gemäß Anspruch 10, mit den Schritten:

- Abdichten eines im Bereich des zweiten Innenrohrlängsendes (20) angeordneten zweiten Außenrohrlängsendes (24) des Außenrohrs (4) und des zweiten Innenrohrlängsendes (20) vor dem Einbringen des zweiten elektrisch leitfähigen Fluides (7) in den Referenzraum (21) und in den erweiterten Referenzraum (22);
- zum Einbringen des zweiten elektrisch leitfähigen Fluides (7) in den Referenzraum (21) und in den erweiterten Referenzraum (22): Tauchen des im Bereich des ersten Innenrohrlängsendes (19) angeordneten ersten Außenrohrlängsendes (23) des Außenrohrs (4) in das zweite elektrisch leitfähige Fluid (7), Einbringen der Einstabmesskette (1) zusammen mit dem zweiten elektrisch leitfähigen Fluid (7) in einen Vakuumbehälter, Evakuieren und anschließendes Belüften des Vakuumbehälters, so dass das zweite elektrisch leitfähige Fluid (7) via einen im Bereich des ersten Außenrohrlängsendes (23) zwischen dem Außenrohr (4) und dem Innenrohr (5) ausgebildeten Spalt in den Referenzraum (21) eintritt und via das Durchgangsloch (10) in den erweiterten Referenzraum (22) eintritt.

**12.** Verfahren gemäß Anspruch 11, bei dem vor dem Einbringen des zweiten elektrisch leitfähigen Fluides (7) in den Referenzraum (21) und in den erweiterten Referenzraum (22) in den Spalt im Bereich des ersten Außenrohrlängsendes (23) das Diaphragma (14) eingebracht wird, wobei das Diaphragma (14) ein Hydrogel ist.

**13.** Verfahren gemäß Anspruch 12, bei dem das Hydrogel in seinem trockenen Zustand in den Spalt eingebracht wird und dabei das Hydrogel kleiner als der Spalt ist und nach dem Einbringen des zweiten elektrisch leitfähigen Fluides (7) in den Referenzraum (21) und den erweiterten Referenzraum (22) das Diaphragma (14) unter einer Druckspannung steht.

**14.** Verfahren gemäß einem der Ansprüche 10 bis 13, bei dem das Außenrohr (4) in Form von mindestens zwei Schalen bereitgestellt wird und zum Anordnen des Innenrohrs (5) in dem Außenrohr (4) das Innenrohr (5) in die Schalen eingebracht wird und anschließend die Schalen zu dem Außenrohr (4) zusammengefügt werden.

**15.** Verfahren gemäß einem der Ansprüche 10 bis 14, bei dem das Innenrohr (5) ein Klebstoffdurchgangsloch (11) aufweist und zum Einbringen der ersten Dichtung (12) in das Innenrohr (5) ein Klebstoff via das Klebstoffdurchgangsloch (11) in das Innenrohr (5) eingebracht wird, der durch sein Aushärten die erste Dichtung (12) bildet.

## Claims

**1.** Combination electrode (1) having an inner tube (5) which has a first inner tube longitudinal end (19), which is of closed design, and a second inner tube longitudinal end (20), a first seal (12) which is arranged in the inner tube (5) and seals off the first inner tube longitudinal end (19), a first electrically conductive fluid (6) which is arranged in the inner tube (5) between the first inner tube longitudinal end (19) and the first seal (12), an outer tube (4) which is arranged around the inner tube (5) and delimits a reference chamber (21) which is arranged between the outer tube (4) and the inner tube (5), a passage hole (10) which is arranged in the inner tube (5) and is arranged between the first seal (12) and the second inner tube longitudinal end (20) and connects the reference chamber (21) in a fluid-conducting manner to an expanded reference chamber (22) which is arranged within the inner tube (5) and is arranged in a region between the first seal (12) and the second inner tube longitudinal end (20), a second electrically conductive fluid (7) which is arranged in the reference chamber (21) and the expanded reference chamber (22), a working electrode (2) which extends via the first seal (12) into the first conductive fluid (6), and a reference electrode (3) which is in contact with the second conductive fluid (7), wherein that part of the working electrode (2) which is

arranged in the expanded reference chamber (22) is sheathed by an electrically insulating layer (25), wherein the outer tube (4) has a first outer tube longitudinal end (23) in the region of the first inner tube longitudinal end (19) and the combination electrode (1) has a diaphragm (14) in the region of the first outer tube longitudinal end (23), which diaphragm is designed to keep the second electrically conductive fluid (7) in the reference chamber (21).

**2.** Combination electrode (1) according to Claim 1, wherein the reference electrode (3) is arranged in the reference chamber (21).

**3.** Combination electrode (1) according to Claim 1 or 2, wherein the reference electrode (3) is arranged in the expanded reference chamber (22).

**4.** Combination electrode (1) according to one of Claims 1 to 3, wherein the combination electrode (1) has a printed circuit board which is fastened to the inner tube (5) and to which the working electrode (2) and the reference electrode (3) are fastened.

**5.** Combination electrode (1) according to one of Claims 1 to 4, wherein the inner tube (5) has an adhesive passage hole (11) which is arranged in the region of the first seal (12).

**6.** Combination electrode (1) according to one of Claims 1 to 5, wherein the combination electrode (1) has a second seal (13) which is arranged in the inner tube (5) and is arranged between the passage hole (10) and the second inner tube longitudinal end (20) and seals off the expanded reference chamber (22).

**7.** Combination electrode (1) according to one of Claims 1 to 6, wherein the diaphragm (14) is a hydrogel.

**8.** Combination electrode (1) according to one of Claims 1 to 7, wherein the inner tube (5) has a glass membrane (9) in the region of the first inner tube longitudinal end (19).

**9.** Combination electrode (1) according to one of Claims 1 to 8, wherein the combination electrode (1) is a pH combination electrode and/or a redox sensor, in particular wherein the pH combination electrode is a pH glass electrode.

**10.** Method for producing a combination electrode (1), comprising the steps of:

- providing an inner tube (5) which has a first inner tube longitudinal end (19) which is of closed design, a second inner tube longitudinal end (20) and a passage hole (10);
- providing an outer tube (4);
- filling the inner tube (5) with a first electrically conductive fluid (6);
- introducing a working electrode (2) into the inner tube (5);
- introducing a first seal (12) into the inner tube (5) between the passage hole (10) and the first inner tube longitudinal end (19), so that the first electrically conductive fluid (6) is delimited by the first seal (12) in the region of the first inner tube longitudinal end (19), the working electrode (2) extends via the first seal (12) into the first electrically conductive fluid (6) and an expanded reference chamber (22) which is arranged within the inner tube (5) and is arranged in a region between the first seal (12) and the second inner tube longitudinal end (20) is formed;
- arranging the inner tube (5) in the outer tube (4), so that a reference chamber (21) which is arranged between the outer tube (4) and the inner tube (5) and is connected in a fluid-conducting manner to the expanded reference chamber (22) via the passage hole (10) is formed;
- introducing a reference electrode (3) into the reference chamber (21) and/or into the expanded reference chamber (22),
- introducing a second electrically conductive fluid (7) into the reference chamber (21) and into the expanded reference chamber (22), so that the second electrically conductive fluid (7) makes contact with the reference electrode (3),

wherein that part of the working electrode (2) which is arranged in the expanded reference chamber (22) is sheathed by an electrically insulating layer (25),
wherein the outer tube (4) has a first outer tube longitudinal end (23) in the region of the first inner tube longitudinal end (19) and a diaphragm (14) is introduced in the region of the first outer tube longitudinal end (23) and is designed to keep the second electrically conductive fluid (7) in the reference chamber (21).

11. Method according to Claim 10, comprising the steps of:

- sealing off a second outer tube longitudinal end (24), which is arranged in the region of the second inner tube longitudinal end (20), of the outer tube (4) and the second inner tube longitudinal end (20) before the introduction of the second electrically conductive fluid (7) into the reference chamber (21) and into the expanded reference chamber (22);
- for introducing the second electrically conductive fluid (7) into the reference chamber (21) and into the expanded reference chamber (22): immersing the first outer tube longitudinal end (23), which is arranged in the region of the first inner tube longitudinal end (19), of the outer tube (4) into the second electrically conductive fluid (7), introducing the combination electrode (1), together with the second electrically conductive fluid (7), into a vacuum container, evacuating and then venting the vacuum container, so that the second electrically conductive fluid (7) enters the reference chamber (21) via a gap which is formed in the region of the first outer tube longitudinal end (23) between the outer tube (4) and the inner tube (5) and entering the expanded reference chamber (22) via the passage hole (10).

12. Method according to Claim 11, in which, before the introduction of the second electrically conductive fluid (7) into the reference chamber (21) and into the expanded reference chamber (22), the diaphragm (14) is introduced into the gap in the region of the first outer tube longitudinal end (23), wherein the diaphragm (14) is a hydrogel.

13. Method according to Claim 12, in which the hydrogel, in its dry state, is introduced into the gap and in this case the hydrogel is smaller than the gap and, after the introduction of the second electrically conductive fluid (7) into the reference chamber (21) and the expanded reference chamber (22), the diaphragm (14) is under compressive stress.

14. Method according to one of Claims 10 to 13, in which the outer tube (4) is provided in the form of at least two shells and, for arrangement of the inner tube (5) in the outer tube (4), the inner tube (5) is introduced into the shells and then the shells are joined together to form the outer tube (4).

15. Method according to one of Claims 10 to 14, in which the inner tube (5) has an adhesive passage hole (11) and, in order to introduce the first seal (12) into the inner tube (5), an adhesive is introduced into the inner tube (5) via the adhesive passage hole (11) and forms the first seal (12) owing to being cured.

## Revendications

1. Electrode combinée (1) avec un tube intérieur (5) présentant une première extrémité longitudinale du tube intérieur (19) qui est fermée et une deuxième extrémité longitudinale du tube intérieur (20), un premier joint (12) disposé dans le tube intérieur (5), qui ferme de manière étanche la première extrémité longitudinale du tube intérieur (19), un premier fluide électriquement conducteur (6) qui est disposé dans le tube intérieur (5) entre la première extrémité longitudinale du tube intérieur (19) et le premier joint (12), un tube extérieur (4) qui entoure le tube intérieur (5) et délimite une chambre de référence (21) disposée entre le tube extérieur (4) et le tube intérieur (5), un trou passant (10) disposé dans le tube intérieur (5), qui est disposé entre le premier joint (12) et la deuxième extrémité longitudinale (20) du tube intérieur et relie en communication fluidique la chambre de référence (21) à une chambre de référence étendue (22) disposée à l'intérieur du tube intérieur (5), qui est disposée dans une zone comprise entre le premier joint (12) et la deuxième extrémité longitudinale du tube intérieur (20), un deuxième fluide électriquement conducteur (7), qui est disposé dans la chambre de référence (21) et dans la chambre de référence étendue (22), une électrode de travail (2), qui s'étend à travers le premier joint (12) dans le premier fluide conducteur (6), et une électrode de référence (3), qui est en contact avec le deuxième fluide conducteur (7), la partie de l'électrode de travail (2) disposée dans la chambre de référence étendue (22) étant enrobée d'une couche électriquement isolante (25), le tube extérieur (4) présentant une première extrémité longitudinale du tube extérieur (23) dans la zone de la première extrémité longitudinale (19) du tube intérieur et l'électrode combinée (1) présentant un diaphragme (14) dans la zone de la première extrémité longitudinale (23) du tube extérieur, qui est agencé pour garder le deuxième fluide électriquement conducteur (7) dans la chambre de référence (21).

2. Electrode combinée (1) selon la revendication 1, dans laquelle l'électrode de référence (3) est disposée dans la chambre de référence (21).

3. Electrode combinée (1) selon la revendication 1 o 2, dans laquelle l'électrode de référence (3) est disposée dans la chambre de référence étendue (22).

4. Electrode combinée (1) selon l'une des revendications 1 à 3, dans laquelle l'électrode combinée (1) a une carte à circuit imprimé qui est fixée au tube intérieur (5) et à laquelle l'électrode de travail (2) et l'électrode de référence (3) sont fixées.

5. Electrode combinée (1) selon l'une des revendications 1 à 4, dans laquelle le tube intérieur (5) a un trou passant pour adhésif (11) disposé dans la zone du premier joint (12).

6. Electrode combinée (1) selon l'une des revendications 1 à 5, dans laquelle l'électrode combinée (1) a un deuxième joint (13) disposé dans le tube intérieur (5), qui est disposé entre le trou passant (10) et la deuxième extrémité longitudinale du tube intérieur (20) et ferme de manière étanche la chambre de référence étendue (22).

7. Electrode combinée (1) selon l'une des revendications 1 à 6, dans laquelle le diaphragme (14) est un hydrogel.

8. Electrode combinée (1) selon l'une des revendications 1 à 7, dans laquelle le tube intérieur (5) présente une membrane en verre (9) dans la zone de la première extrémité longitudinale (19) du tube intérieur.

9. Electrode combinée (1) selon l'une des revendications 1 à 8, dans laquelle l'électrode combinée (1) est une électrode pH combinée et/ou un capteur redox, en particulier dans laquelle l'électrode pH combinée est une électrode pH en verre.

10. Méthode de production d'une électrode combinée (1), avec les étapes de:

- prévoir un tube intérieur (5) présentant une première extrémité longitudinale de tube intérieur (19) qui est fermée, une deuxième extrémité longitudinale de tube intérieur (20) et un trou passant (10);
- prévoir un tube extérieur (4);
- remplir le tube intérieur (5) d'un premier fluide électriquement conducteur (6);
- introduire une électrode de travail (2) dans le tube intérieur (5);
- insérer un premier joint (12) dans le tube intérieur (5) entre le trou passant (10) et la première extrémité longitudinale (19) du tube intérieur, afin que le premier fluide électriquement conducteur (6) soit délimité par le premier joint (12) dans la zone de la première extrémité longitudinale (19) du tube intérieur, l'électrode de travail (2) s'étende à travers le premier joint (12) dans le premier fluide électriquement conducteur (6) et une chambre de référence étendue (22) soit formée, disposée à l'intérieur du tube intérieur (5), qui est disposée dans une zone comprise entre le premier joint (12) et la deuxième extrémité longitudinale (20) du tube intérieur;
- disposer le tube intérieur (5) dans le tube extérieur (4) de façon à former une chambre de référence (21), qui est disposée entre le tube extérieur (4) et le tube intérieur (5) et est reliée par le trou passant (10) en communication fluidique avec la chambre de référence étendue (22);
- introduire une électrode de référence (3) dans la chambre de référence (21) et/ou dans la chambre de référence étendue (22);
- introduire un deuxième fluide électriquement conducteur (7) dans la chambre de référence (21) et dans la chambre de référence étendue (22), afin que le deuxième fluide électriquement conducteur (7) entre en contact avec l'électrode de référence (3),

la partie de l'électrode de travail (2) qui est disposée dans la chambre de référence étendue (22) étant enrobée d'une couche électriquement isolante (25),
dans laquelle le tube extérieur (4) présente une première extrémité longitudinale (23) du tube extérieur dans la zone de la première extrémité longitudinale (19) du tube intérieur et dans la zone de la première extrémité longitudinale (23) du tube extérieur un diaphragme (14) est introduit, qui est agencé pour garder le deuxième fluide électriquement conducteur (7) dans la chambre de référence (21).

11. Méthode selon la revendication 10, comportant les étapes de:

- fermer de manière étanche une deuxième extrémité longitudinale (24) du tube extérieur (4) disposée dans la zone de la deuxième extrémité longitudinale (20) du tube intérieur et de la deuxième extrémité longitudinale (20) du tube intérieur avant l'introduction du deuxième fluide électriquement conducteur (7) dans la chambre de référence (21) et dans la chambre de référence étendue (22);
- pour l'injection du deuxième fluide électriquement conducteur (7) dans la chambre de référence (21) et dans la chambre de référence étendue (22): plonger la première extrémité longitudinale (23) du tube extérieur (4), disposée dans la zone de la première extrémité longitudinale (19) du tube intérieur, dans le deuxième fluide

électriquement conducteur (7), introduire l'électrode combinée (1) ainsi que le deuxième fluide électriquement conducteur (7) dans un récipient sous vide, évacuer et donc purger le récipient sous vide, afin que le deuxième fluide électriquement conducteur (7) entre dans la chambre de référence (21) à travers une fente formée dans la zone de la première extrémité longitudinale du tube extérieur (23) entre le tube extérieur (4) et le tube intérieur (5) et entre dans la chambre de référence étendue (22) et à travers le trou passant(10).

**12.** Méthode selon la revendication 11, dans laquelle, avant l'introduction du deuxième fluide électriquement conducteur (7) dans la chambre de référence (21) et dans la chambre de référence étendue (22), le diaphragme (14) est introduit dans la fente dans la zone de la première extrémité longitudinale du tube extérieur (23), le diaphragme (14) étant un hydrogel.

**13.** Méthode selon la revendication 12, dans laquelle l'hydrogel est introduit dans la fente à l'état sec et de ce fait l'hydrogel est plus petit que la fente et après l'introduction du deuxième fluide électriquement conducteur (7) dans la chambre de référence (21) et dans la chambre de référence étendue (22) le diaphragme (14) est soumis à un effort de compression.

**14.** Méthode selon l'une des revendications 10 à 13, dans laquelle le tube extérieur (4) est agencé sous la forme d'au moins deux coques et, pour disposer le tube intérieur (5) dans le tube extérieur, le tube intérieur (5) est introduit dans les coques (4) et donc les coques sont assemblées pour former le tube extérieur (4).

**15.** Méthode selon l'une des revendications 10 à 14, dans laquelle le tube intérieur (5) présente un trou passant pour adhésif (11) et, pour introduire le premier joint (12) dans le tube intérieur (5), un adhésif qui forme le premier joint (12) par son durcissement est introduit dans le tube intérieur (5), à travers le trou passant pour adhésif (11).

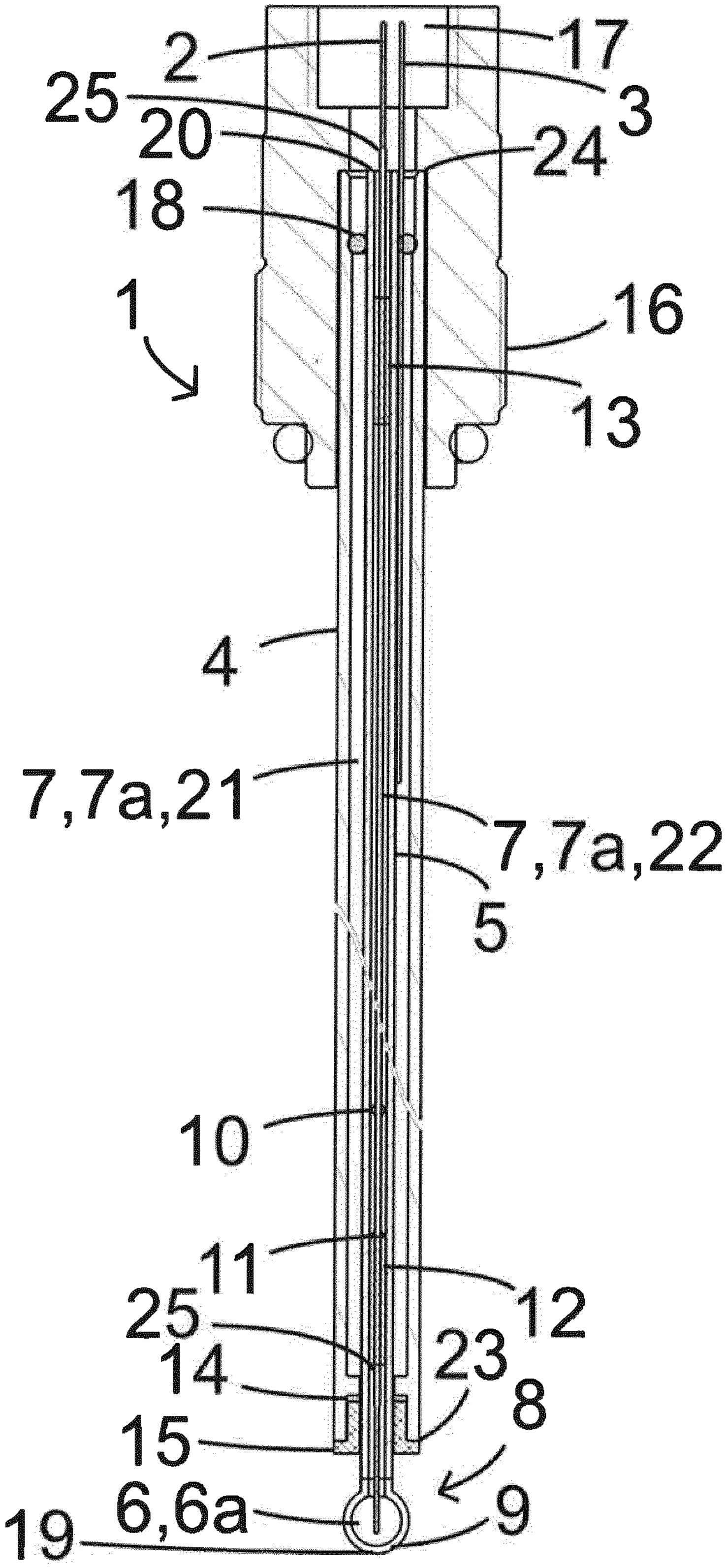
2
17
25
3
20
24
18
16
1
13
4
7,7a,21
7,7a,22
5
10
11
12
25
23
14
8
15
6,6a
9
19

Fig. 1

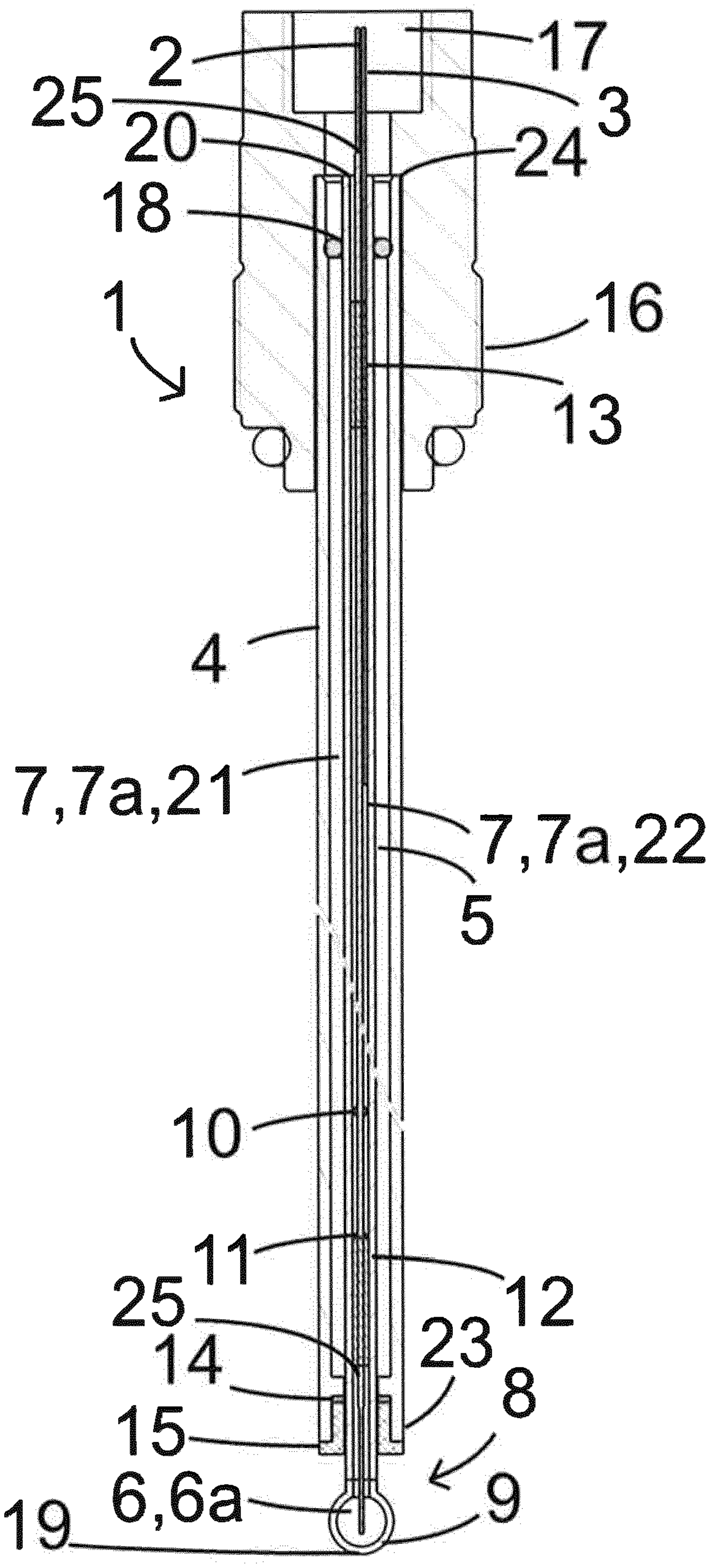

2
17
25
3
20
24
18
1
16
13
4
7,7a,21
7,7a,22
5
10
11
12
25
23
14
8
15
6,6a
9
19


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 200513369 B
- DE 1090451
- DE 9417267 U
- US 2014034516 A